# EUROPÄISCHE PATENTSCHRIFT

(11) **EP 3 121 443 B1**
(45) Veröffentlichungstag und Bekanntmachung des Hinweises auf die Patenterteilung: **07.03.2018**
(21) Anmeldenummer: 16177929.3
(22) Anmeldetag: 05.07.2016
(51) Int. Cl.: F03D 80/70, F03D 15/00

(54) **TRIEBSTRANGLAGERUNG EINER WINDENERGIEANLAGE UND WINDENERGIEANLAGE**
DRIVE ROD BEARING OF A WIND ENERGY SYSTEM AND WIND ENERGY SYSTEM
LOGEMENT DES PALIERS D'ENTRAINEMENT D'EOLIENNE ET EOLIENNE

(30) Priorität: 22.07.2015 DE 102015009325
(43) Veröffentlichungstag der Anmeldung: 25.01.2017
(73) Patentinhaber: Senvion GmbH, 22297 Hamburg (DE)
(72) Erfinder: TREDE, Alf, 25885 Immenstedt (DE)
(74) Vertreter: Seemann & Partner Patentanwälte mbB

(56) Entgegenhaltungen:
- EP-A2- 1 878 917
- GB-A- 2 074 661
- US-A1- 2007 290 509

## Beschreibung

Die Erfindung betrifft eine Triebstranglagerung einer Windenergieanlage mit einem Rotor, einer im Wesentlichen horizontal ausgerichteten Rotorwelle, einem Planetengetriebe und einem Maschinenträger, umfassend ein gegenüber dem Planetengetriebe rotorseitiges Rotorlager, ein Planetenträgerlager für einen rotorseitigen Planetenträger des Planetengetriebes und wenigstens eine seitliche Drehmomentstütze, die an einer Seite des Planetengetriebes mit dem Planetengetriebe verbunden ist, wobei das Rotorlager als Festlager zur Aufnahme axialer Belastungen ausgebildet ist. Die Erfindung betrifft ferner eine entsprechende Windenergieanlage.

Viele moderne Windenergieanlagen der Megawatt- und Multimegawatt-Klasse, siehe z.B. EP 1878917 A, im vorliegenden Fall Horizontalachsanlagen mit im Wesentlichen horizontalen Rotorwellenachsen, weisen in einer Gondel bzw. einem Maschinenhaus an der Turmspitze ein Getriebe auf, das den Rotor mit einem Generator verbindet. In diesen Windenergieanlagen steht die Rotorwelle horizontal oder etwas gegenüber der Horizontalen geneigt, was den Vorteil eines größeren Abstandes der Rotorblätter zum Turm hat. In der Gondel ist ein Maschinenträger untergebracht, auf dem der Generator sowie das Getriebe gelagert sind. Da der Maschinenträger auch den Rotor tragen muss, wird in solchen Fällen üblicherweise eine Dreipunktlagerung oder eine Vierpunktlagerung als Lagerung für den Triebstrang aus Rotor, Rotorwelle und Getriebe verwendet. Unter einer Triebstranglagerung wird im Rahmen der vorliegenden Erfindung im Folgenden eine Rotor- und Getriebelagerung verstanden.

Die beispielhaft zu nennende Dreipunktlagerung umfasst ein Wälzlager als Rotorlager, durch das die Rotorwelle geführt ist und das die Rotorwelle stützt. Die Rotorwelle mündet in das Getriebe. Zwei weitere Lagerpunkte sind seitlich am Getriebe angeordnet und befestigen das Getriebe am Maschinenträger. Diese seitlichen Lager nehmen das Getriebedrehmoment und Biegemomente der Rotorwelle auf und werden als Auflager bzw. Getriebeauflager bezeichnet.

Bei Dreipunktlagern werden alle Kräfte aus Nick- und Gierlasten, also Biegemomenten aus der Rotorwelle, sowie das Drehmoment aus der Rotation des Rotors (torsionale Last) über die Auflager an den Maschinenträger übertragen. Eine weiche Buchsenauslegung an den seitlichen Auflagern führt dann neben einer Reduktion der torsionalen Anregung und folglich guter Körperschallentkopplung auch zu einer größeren Verlagerung des Getriebes unter Biegebelastungen. Dies kann zu unzulässigen Verlagerungen der Generatorkupplung oder sogar des Hauptlagers führen. Auch die Einleitung der Biegelasten in eine offene Maschinenträgerkonstruktion stellt hierbei eine Herausforderung dar.

Eine Alternative hierzu stellen Vierpunktlager dar, wie sie beispielsweise in den Baureihen 5M und 6M der Anmelderin verwendet werden. Diese weisen neben meist zwei seitlichen Auflagern oder Drehmomentstützen am Getriebe zwei separate Lager für die Rotorwelle vor dem Getriebe auf, wobei eines der Rotorwellenlager als Loslager und das andere als Festlager ausgebildet ist, das axiale Kräfte auf den Rotor aufnimmt und in den Maschinenträger ableitet, so dass das Getriebe nicht mehr axial belastet wird. Die beiden Rotorwellenlager nehmen auch die Biegelasten der Rotorwelle auf, so dass die Drehmomentstützen nur noch durch die Drehung des Rotors verursachten Torsionslasten aufzufangen haben und das Getriebe nicht mehr wie bei den Dreipunktlagern verlagert wird.

Demgegenüber liegt der vorliegenden Erfindung die Aufgabe zugrunde, eine einfache und effektive Triebstranglagerung sowie eine Windenergieanlage mit einer entsprechenden Triebstranglagerung zur Verfügung zu stellen.

Diese Aufgabe wird durch eine Triebstranglagerung einer Windenergieanlage mit einem Rotor, einer im Wesentlichen horizontal ausgerichteten Rotorwelle, einem Planetengetriebe und einem Maschinenträger, umfassend ein gegenüber dem Planetengetriebe rotorseitiges Rotorlager, ein Planetenträgerlager für einen rotorseitigen Planetenträger des Planetengetriebes und wenigstens eine seitliche Drehmomentstütze, die an einer Seite des Planetengetriebes mit dem Planetengetriebe verbunden ist, wobei das Rotorlager als Festlager zur Aufnahme axialer Belastungen ausgebildet ist, gelöst, die dadurch weitergebildet ist, dass ein Radiallager zur Aufnahme von Biegelasten der Rotorwelle vorgesehen ist, das ein ringförmiges Elastomer umfasst, das in einer Ebene des Planetenträgerlagers angeordnet und in einer Befestigungsstruktur des Maschinenträgers gelagert ist.

Im klassischen Fall zweier Drehmomentstützen, die symmetrisch an den beiden Seiten des Getriebes angeordnet sind, handelt es sich bei der erfindungsgemäßen Triebstranglagerung um eine Vierpunktlagerung. Bei einem Triebstrang mit einem Planetengetriebe ist die Rotorwelle getriebeseitig an einen zentralen Planetenträger einer, insbesondere ersten, Planetenstufe des Planetengetriebes angeflanscht, der in der Verlängerung der Rotorwelle angeordnet ist. Der Planetenträger ist mittels eines Planetenträgerlagers, das in den meisten Fällen als Wälzlager ausgebildet ist, gegenüber einem Gehäuse des Planetengetriebes gelagert.

Erfindungsgemäß ist in der Ebene des Planetenträgerlagers das ringförmige Elastomer so angeordnet, dass es das Gehäuse des Planetenträgers gegenüber dem Maschinenträger radial abstützt. Damit überträgt das ohnehin vorhandene Planetenträgerlager Biegemomente über das ringförmige Elastomer an den Maschinenträger. Dieses ist in der Ebene des Planetenträgerlagers angeordnet, überlappt also in axialer Richtung wenigstens teilweise mit dem Planetenträgerlager, damit ein günstiger radialer Kraftfluss ohne axialen Versatz, also auf direktestem Weg kraftflussgerecht, realisiert wird. So werden Biegemomente weitergeleitet, ohne die Verzahnungsteile des Getriebes zu belasten.

Eine Anpassung ist gegebenenfalls insofern angezeigt, dass das Planetenträgerlager so auszulegen ist, dass es die kraftflussgerechte Übertragung der Biegelasten von der Rotorwelle auf die Befestigungsstruktur des Maschinenträgers aushält.

Die erfindungsgemäße Triebstranglagerung ist vergleichbar mit einer doppelten Rotorlagerung, aber ohne zweites Rotorlager. Gegenüber dem Stand der Technik entfällt erfindungsgemäß ein eigenes getriebeseitiges Lager für die Rotorwelle selbst, das nicht gleichzeitig ein Lager für das Getriebe ist. Ferner werden die Biegelasten und die torsionalen Lasten funktionsgetrennt über unterschiedliche Elemente in die Maschinenträgerstruktur eingeleitet.

Das rotorseitige Rotorlager dient erfindungsgemäß als Festlager für Axiallasten, während das im Getriebe angeordnete Radiallager mit dem Planetenträgerlager und dem ringförmigen Elastomer nunmehr die Biegelasten der Rotorwelle aufnimmt und in den Maschinenträger einleitet, die zuvor vom getriebeseitigen Rotorlager aufgenommen worden waren, wodurch das Planetenträgerlager bislang von Biegemomenten entlastet war. Mit der erfindungsgemäßen Lagerung wird eine gute Lagerung der Rotorwelle erreicht sowie die Beanspruchung des Planetengetriebes, das im Rahmen der Erfindung auch ein Planeten-/Stirnradgetriebe umfasst, durch Schiebe- und Biegebeanspruchungen gering gehalten. Anstelle eines Planetengetriebes kann auch ein reines Stirnradgetriebe entsprechend gelagert werden.

In einer vorteilhaften Weiterbildung ist das Radiallager als Loslager für die Rotorwelle in Bezug auf axiale Belastungen der Rotorwelle ausgebildet. Dies vereinfacht die Ausführung des Radiallagers und ist möglich, da bereits das rotorseitige Rotorlager als Festlager ausgebildet ist.

Vorzugsweise weist das ringförmige Elastomer eine Shore-Härte (A) von mehr als 70, insbesondere mehr als 90, insbesondere mehr als 120 auf. Es ist somit relativ hart ausgeführt und hält radiale Verlagerungen des Getriebes unter Biegebelastung gering, wodurch das Getriebe selbst ebenfalls geschont wird.

Vorteilhafterweise ist das ringförmige Elastomer in Segmenten des Maschinenträgers mit verschraubtem oder verschraubbarem Bügel oder in einer komplett umlaufenden Struktur gelagert.

Die wenigstens eine seitliche Drehmomentstütze ist vorteilhafterweise zur Aufnahme torsionaler Lasten ausgebildet. Dazu ist oder sind vorzugsweise ein oder mehrere Elastomerkörper der wenigstens einen seitlichen Drehmomentstütze in Druckrichtung weich ausgeführt, insbesondere mit einer Shore-Härte (A) zwischen 30 und 80, insbesondere zwischen 35 und 65. Diese vergleichsweise geringe Härte sorgt für eine gute Körperschallentkopplung, die bezüglich der torsionalen Anregungen besonders wichtig sind. Die Auswahl derart geringer Härten ist durch die Aufnahme der Biegelasten im Radiallager möglich, da das Getriebe durch die funktionale Trennung der verschiedenen Elemente zur Aufnahme von Biegelasten bzw. torsionalen Lasten torsional sehr weich gelagert werden kann, ohne dass es unter Biegemomenten zu einer unzulässigen Verlagerung kommt.

Die Drehmomentstütze oder Drehmomentstützen ist oder sind vorzugsweise ohne Vorspannung ausgelegt. Dies ist möglich, da sich durch das im Produktionsbetrieb der Windenergieanlage immer gleich gerichtete Drehmoment des Rotors automatisch eine Betriebsvorspannung einstellt. Alternativ oder zusätzlich hierzu ist vorteilhafterweise zur Rückfederung ein Anschlagpuffer vorhanden.

In einer vorteilhaften Weiterbildung umfasst die Drehmomentstütze dachförmig angestellte und/oder buchsenförmige Elastomerkörper.

Vorzugsweise sind zwei Drehmomentstützen umfasst, die symmetrisch beiderseits des Planetengetriebes angeordnet sind. Diese Anordnung ermöglicht eine gleichmäßige Einleitung von Torsionskräften in den Maschinenträger mit geringerer lokaler Beanspruchung als im Fall einer einzigen Drehmomentstütze.

Die der Erfindung zugrunde liegende Aufgabe wird ferner gelöst durch eine Windenergieanlage mit einem Rotor, einer im Wesentlichen horizontal ausgerichteten Rotorwelle, einem Planetengetriebe und einem Maschinenträger, umfassend eine zuvor beschriebene erfindungsgemäße Triebstranglagerung. Die Windenergieanlage teilt mit der erfindungsgemäßen Triebstranglagerung deren zuvor beschriebenen Merkmale, Eigenschaften und Vorteile.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematischen Querschnitt durch die Gondel einer bekannten Windenergieanlage,
- Fig. 2: eine schematische Perspektivdarstellung einer erfindungsgemäßen Triebstranglagerung und
- Fig. 3: eine schematische Querschnitts- und Perspektivdarstellung eines erfindungsgemäßen Radiallagers.

In den Zeichnungen sind jeweils gleiche oder gleichartige Elemente und/oder Teile mit denselben Bezugsziffern versehen, so dass von einer erneuten Vorstellung jeweils abgesehen wird.

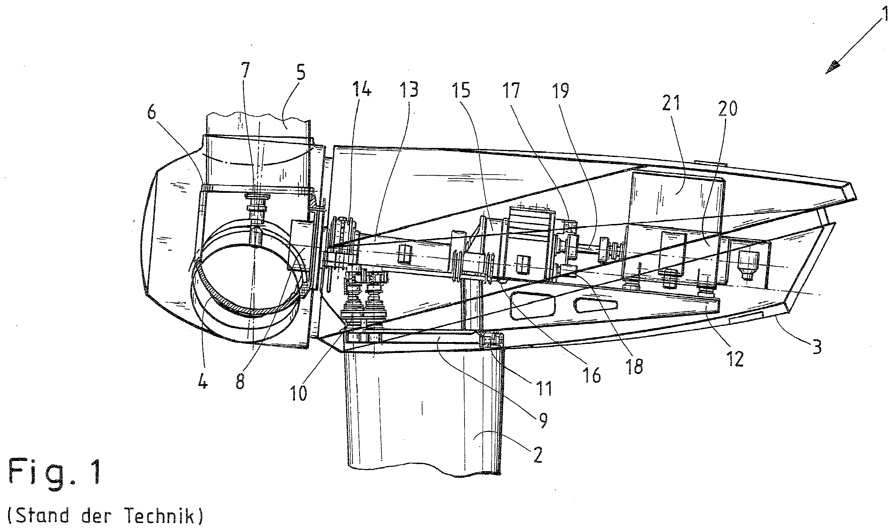

In Fig. 1 ist eine Querschnittsdarstellung durch eine Gondel einer bekannten Windenergieanlage, beispielsweise der Windenergieanlage MD70 der Anmelderin, gezeigt. Die Gondel 3 sitzt auf einem Turm 2, dessen gondelnaher Abschnitt dargestellt ist. Links in Fig. 1 ist ein Rotor dargestellt mit einer Rotornabe 4, Rotorblättern 5, die nur im Bereich der Rotorblattwurzel dargestellt sind. Die Rotorblätter 5 weisen im Bereich der Rotorblattwurzel jeweils ein Rotorblattlager 6 auf, an das ein Blattverstellantrieb 7 angreift. Der Blattverstellantrieb 7 wird durch eine Steuerung 8 angesteuert und verändert im Betrieb der Windenergieanlage 1 den Blatteinstellwinkel des jeweiligen Rotorblatts 5.

Die Gondel 3 beherbergt einen Maschinenträger 12, der über einen Turmkopfdrehkranz 9 mit dem Turm 2 verbunden ist. Am Turmkopfdrehkranz 9 greifen Windnachführungsmotoren 10 einer Azimutverstellung an, die die Gondel bzw. den Rotor in Richtung auf die herrschende Windrichtung ausrichten. Hierzu sind vier Windnachführungsmotoren 10 vorhanden, von denen zwei auf der dargestellten Seite angeordnet sind und zwei verdeckt dahinter auf der anderen Seite des Maschinenträgers 12. Ebenfalls greifen am Turmkopfdrehkranz 9 Azimutbremsen 11 an, die der Arretierung der Azimuteinstellung des Rotors dienen.

Der Rotor treibt eine Rotorwelle 13 an, die in einem als Wälzlager ausgebildeten Rotorlager 14 drehbar gelagert ist. Die Rotorwelle 13 treibt ein Planetengetriebe 15, das die langsame Drehbewegung der Rotorwelle in eine schnelle Drehbewegung einer Generatorwelle 19, die mit Kupplungen dargestellt ist, umsetzt, die wiederum einen Generator 20 zur Stromerzeugung antreibt, der mit einem Wärmetauscher 21 ausgestattet ist.

Die Triebstranglagerung ist bei der in Fig. 1 gezeigten Windenergieanlage MD70 der Anmelderin als Dreipunktlager ausgebildet. Das Rotorlager 14 ist hierbei als Festlager ausgebildet, das nur wenige Millimeter Spiel in axialer Richtung der Rotorwelle 13 erlaubt. Zwei weitere Lagerpunkte bestehen in den elastischen Getriebeaufhängungen bzw. Auflagern 16, von denen eines in Fig. 1 dargestellt ist, während sich das andere symmetrisch auf der anderen Seite des Planetengetriebes 15 befindet und somit durch das Planetengetriebe 15 verdeckt ist. Diese sind so ausgelegt, dass sie sowohl Torsionslasten als auch Biegelasten der Rotorwelle 13 aufnehmen, die über das Planetengetriebe 15 an die Auflager 16 und weiter auf den Maschinenträger 12 übertragen werden.

Das Auflager 16 bzw. die elastische Getriebeaufhängung ist konventionell gestaltet und besteht aus hohlzylindrischen Elastomerkörpern aus zwei halbzylindrischen Teilkörpern, die um einen zylindrischen Bolzen herum angeordnet sind. Mit seinen zylindrischen Lagern, deren Zylinderachse parallel zur Rotorwelle 13 ausgerichtet ist, handelt es sich bei dem Auflager 16 um ein Loslager, da es aufgrund seiner Weichheit in dieser Richtung nur wenig Rotorschubkraft in Richtung der Rotorwellenachse aufnimmt.

Die buchsenförmigen Elastomerkörper in den Auflagern 16 sind in radialer Richtung hingegen vergleichsweise steif ausgeführt. Das Planetengetriebe 15 weist außerdem eine Rotorbremse 17 und einen Schleifringüberträger 18 auf.

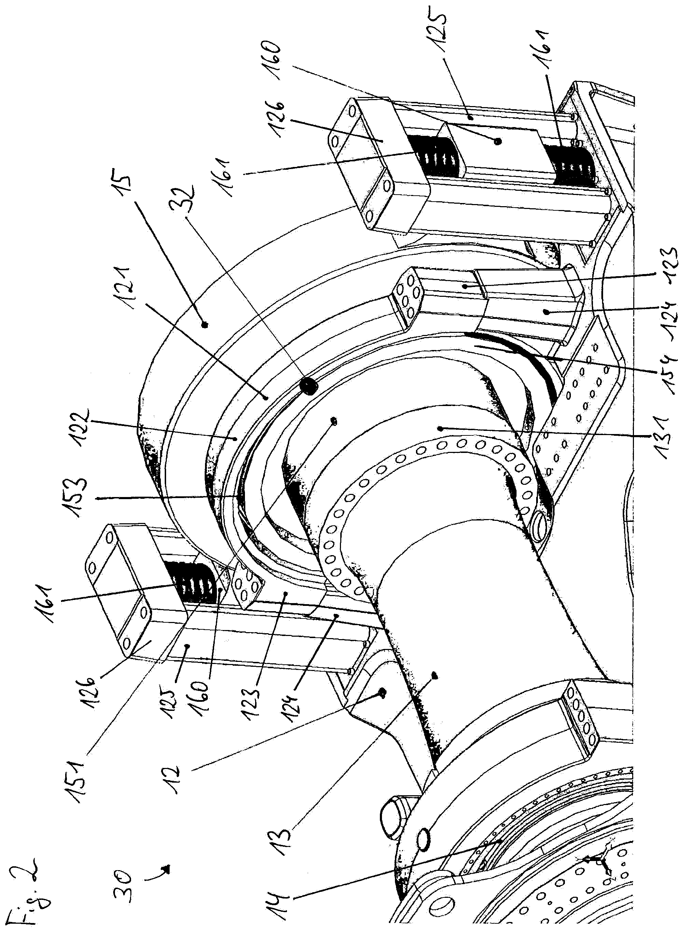

Fig. 2 zeigt perspektivisch ein erfindungsgemäßes Ausführungsbeispiel einer Triebstranglagerung 30. Links unten ist ein Teil eines Rotorlagers 14 gezeigt, das als Festlager zur axialen und radialen Lagerung der Rotorwelle 13 ausgebildet ist. Diese ist mit einem Rotorwellenflansch 131 an einen Planetenträger 151 angeflanscht, der Teil einer ersten Planetenstufe eines Planetengetriebes 15 ist. Der Planetenträger 151 ist mittels eines in Fig. 2 nicht sichtbaren Planetenträgerlagers 152 gegenüber einem Gehäuse 154 des Planetengetriebes 15 gelagert. Ein Radiallager 32 wird dadurch gebildet, dass das Gehäuse 154 des Planetengetriebes 15 zusätzlich mittels eines ringförmigen Elastomers 153 gegenüber einer Befestigungsstruktur 121 verspannt und gelagert ist, die mit dem Maschinenträger 12 verschraubt ist. Dazu weist die Befestigungsstruktur 121 einen halbkreisförmigen Bügel 122 auf, der in zwei Bügelschraubflanschen endet, die mit entsprechenden Schraubflanschen 124 des Maschinenträgers 12 verschraubt sind. Dieses Radiallager 32 ist mit dem relativ harten ringförmigen Elastomer relativ hart ausgelegt.

Die Kombination aus Rotorlager 14 und Radiallager 32 nimmt alle Biegelasten des Rotors bzw. der Rotorwelle 13 auf und leitet sie in den Maschinenträger ab, ohne die Verzahnung des Planetengetriebes 15 zu belasten.

Das Gehäuse 154 des Planetengetriebes 15 weist beidseitig jeweils eine Drehmomentstütze 160 auf, die in jeweils einem Rahmen 125 zwischen Elastomerkörpern 161 gelagert sind. Diese können im Sinne einer guten Körperschallentkopplung weich ausgelegt sein, da sie nur torsionale Lasten zu absorbieren haben, nicht aber Biegebelastungen der Rotorwelle 13. Die Rahmen 125 sind an ihrer Unterseite mit dem Maschinenträger 12 verschraubt und weisen an ihrer Oberseite jeweils einen Deckel 126 auf.

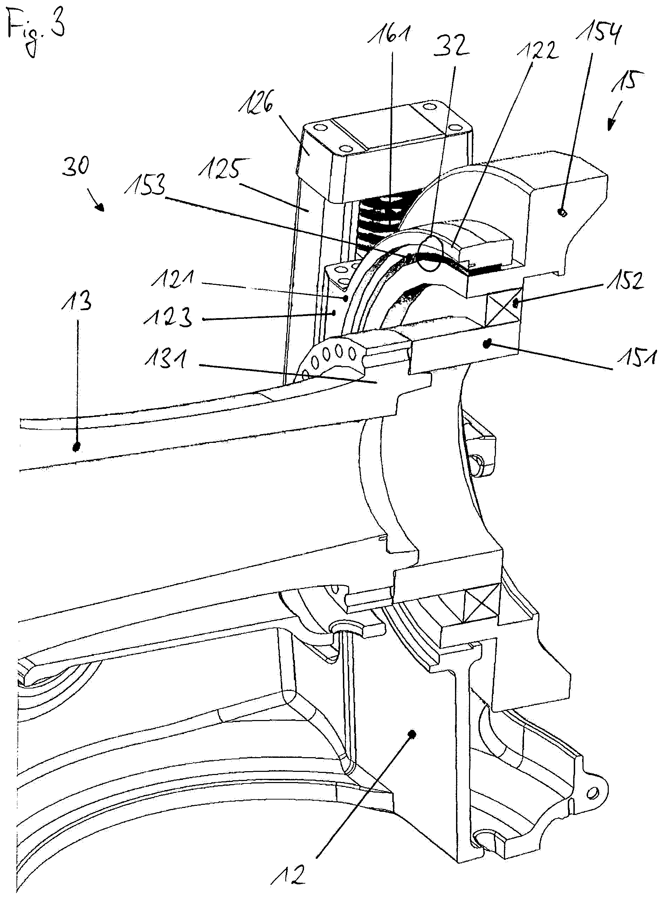

In Fig. 3 ist der innere Aufbau des Radiallagers 32 aus Fig. 2 in einem teilperspektivschen Querschnitt gezeigt. Zusätzlich zu den in Fig. 2 erkennbaren Details ist in Fig. 3 sichtbar, wie die Rotorwelle 13 mittels des Rotorwellenflansches 13 an den Planetenträger 151 angeflanscht ist. Ebenfalls ist das Planetenträgerlager 152 zwischen dem Planetenträger 151 und dem Gehäuse 154 des Planetengetriebes gezeigt. Das Gehäuse 154 weist einen Vorsprung in Richtung auf die Rotorwelle 13 zu auf, dessen Außenseite der Innenseite des Bügels 122 der Befestigungsstruktur 121 gegenüberliegt, wobei ein Spalt verbleibt. Dieser Spalt ist durch das ringförmige Elastomer 153 teilweise ausgefüllt.

In einer Ebene senkrecht zur zentralen Achse der Rotorwelle 13 überlappen das ringförmige Elastomer 153 und das Planetenträgerlager 152, so dass ein direkter radialer Kraftfluss vom Planetenträger 151 über das Planetenträgerlager 152, das Gehäuse 154 und das ringförmige Elastomer auf die umlaufende Befestigungsstruktur 121 und somit auf den Maschinenträger 12 realisiert ist.

Im Rahmen der Erfindung sind Merkmale, die mit "insbesondere" oder "vorzugsweise" gekennzeichnet sind, als fakultative Merkmale zu verstehen.

### Bezugszeichenliste

- 1: Windenergieanlage
- 2: Turm
- 3: Gondel
- 4: Rotornabe
- 5: Rotorblatt
- 6: Rotorblattlager
- 7: Blattverstellantrieb
- 8: Steuerung der Blattverstellung
- 9: Turmkopfdrehkranz
- 10: Windnachführungsmotoren
- 11: Azimutbremsen
- 12: Maschinenträger
- 13: Rotorwelle
- 14: Rotorlager
- 15: Planetengetriebe
- 16: elastische Getriebeaufhängung
- 17: Rotorbremse
- 18: Schleifringüberträger
- 19: Generatorwelle mit Kupplungen
- 20: Generator
- 21: Wärmetauscher
- 30: Triebstranglagerung
- 32: Radiallager
- 121: Befestigungsstruktur
- 122: Bügel
- 123: Bügelschraubflansch
- 124: Schraubflansch
- 125: Rahmen
- 126: Deckel
- 131: Rotorwellenflansch
- 151: Planetenträger
- 152: Planetenträgerlager
- 153: ringförmiges Elastomer
- 154: Gehäuse
- 160: Drehmomentstütze
- 161: Elastomerkörper

## Patentansprüche

1. Triebstranglagerung (30) einer Windenergieanlage (1) mit einem Rotor, einer im Wesentlichen horizontal ausgerichteten Rotorwelle (13), einem Planetengetriebe (15) und einem Maschinenträger (12), umfassend ein gegenüber dem Planetengetriebe (15) rotorseitiges Rotorlager (14), ein Planetenträgerlager (152) für einen rotorseitigen Planetenträger (151) des Planetengetriebes (15) und wenigstens eine seitliche Drehmomentstütze (160, 160'), die an einer Seite des Planetengetriebes (15) mit dem Planetengetriebe (15) verbunden ist, wobei das Rotorlager (14) als Festlager zur Aufnahme axialer Belastungen ausgebildet ist, **dadurch gekennzeichnet, dass** ein Radiallager (32) zur Aufnahme von Biegelasten der Rotorwelle (13) vorgesehen ist, das ein ringförmiges Elastomer (153) umfasst, das in einer Ebene des Planetenträgerlagers (152) angeordnet und in einer Befestigungsstruktur (121) des Maschinenträgers (12) gelagert ist.

2. Triebstranglagerung (30) nach Anspruch 1, **dadurch gekennzeichnet, dass** das Radiallager (32) als Loslager für die Rotorwelle (13) in Bezug auf axiale Belastungen der Rotorwelle (13) ausgebildet ist.

3. Triebstranglagerung (30) nach Anspruch 1 oder 2, **dadurch gekennzeichnet, dass** das ringförmige Elastomer (153) eine Shore-Härte (A) von mehr als 70, insbesondere mehr als 90, insbesondere mehr als 120 aufweist.

4. Triebstranglagerung (30) nach einem der Ansprüche 1 bis 3, **dadurch gekennzeichnet, dass** das ringförmige Elastomer (153) in einer Ebene des rotorseitigen Planetenträgerlagers (152) angeordnet ist und in einer Befestigungsstruktur (121) des Maschinenträgers (12) gelagert ist, insbesondere in Segmenten des Maschinenträgers (12) mit verschraubtem oder verschraubbarem Bügel (122) oder in einer komplett umlaufenden Struktur.

5. Triebstranglagerung (30) nach einem der Ansprüche 1 bis 4, **dadurch gekennzeichnet, dass** die wenigstens eine seitliche Drehmomentstütze (160) zur Aufnahme torsionaler Lasten ausgebildet ist.

6. Triebstranglagerung (30) nach einem der Ansprüche 1 bis 5, **dadurch gekennzeichnet, dass** ein oder mehrere Elastomerkörper (161) der wenigstens einen seitlichen Drehmomentstütze (160) in Druckrichtung weich ausgeführt ist oder sind, insbesondere mit einer Shore-Härte (A) zwischen 30 und 80, insbesondere zwischen 35 und 65.

7. Triebstranglagerung (30) nach einem der Ansprüche 1 bis 6, **dadurch gekennzeichnet, dass** die Drehmomentstütze (160) oder Drehmomentstützen (160) ohne Vorspannung ausgelegt ist oder sind und/oder zur Rückfederung ein Anschlagpuffer vorhanden ist.

8. Triebstranglagerung (30) nach einem der Ansprüche 1 bis 7, **dadurch gekennzeichnet, dass** die Drehmomentstütze (160) dachförmig angestellte und/oder buchsenförmige Elastomerkörper umfasst.

9. Triebstranglagerung (30) nach einem der Ansprüche 1 bis 8, **dadurch gekennzeichnet, dass** zwei Drehmomentstützen (160) umfasst sind, die symmetrisch beiderseits des Planetengetriebes (15) angeordnet sind.

10. Windenergieanlage (1) mit einem Rotor, einer im Wesentlichen horizontal ausgerichteten Rotorwelle (13), einem Planetengetriebe (15) und einem Maschinenträger (12), umfassend eine Triebstranglagerung (30) nach einem der Ansprüche 1 bis 9.

## Claims

1. A drive train bearing (30) of a wind turbine (1) with a rotor, a rotor shaft (13) aligned substantially horizontally, a planetary gear (15) and a mainframe (12), comprising a rotor-side rotor bearing (14) opposite the planetary gear (15), a planetary carrier bearing (152) for a rotor-side planetary carrier (151) of the planetary gear (15), and at least one lateral torque support (160, 160') that is connected with the planetary gear (15) at one side of the planetary gear (15), wherein the rotor bearing (14) is designed as a fixed bearing for accommodating axial loads, **characterized in that** a radial bearing (32) is provided for accommodating flexural loads of the rotor shaft (13) that comprises a ring-shaped elastomer (153) which is arranged in a plane of the planetary carrier bearing (152) and is mounted in a fastening structure (121) of the mainframe (12).

2. The drive train bearing (30) according to claim 1, **characterized in that** the radial bearing (32) is designed as a floating bearing for the rotor shaft (13) with respect to axial loads on the rotor shaft (13).

3. The drive train bearing (30) according to claim 1 or 2, **characterized in that** the ring-shaped elastomer (153) has a Shore hardness (A) of more than 70, in particular more than 90, in particular more than 120.

4. The drive train bearing (30) according to one of claims 1 to 3, **characterized in that** the ring-shaped elastomer (153) is arranged in a plane of the rotor-side planetary support bearing (152) and is mounted in a fastening structure (121) of the mainframe (12), in particular in segments of the mainframe (12) with screwed or screwable brackets (122), or in a completely surrounding structure.

5. The drive train bearing (30) according to one of claims 1 to 4, **characterized in that** the at least one lateral torque support (160) is designed to accommodate torsional loads.

6. The drive train bearing (30) according to one of claims 1 to 5, **characterized in that** one or more elastomer bodies (161) of the at least one lateral torque support (160) is or are designed to be soft in the direction of pressure, in particular with a Shore hardness (A) between 30 and 80, in particular between 35 and 65.

7. The drive train bearing (30) according to one of claims 1 to 6, **characterized in that** the torque support (160) or the torque supports (160) is or are designed without initial tension, and/or a stop buffer is available for resilience.

8. The drive train bearing (30) according to one of claims 1 to 7, **characterized in that** the torque support (160) comprises elastomer bodies at a roof-like angle, and/or sleeve-like elastomer bodies.

9. The drive train bearing (30) according to one of claims 1 to 8, **characterized in that** two torque supports (160) are comprised that are arranged symmetrically on both sides of the planetary gear (15).

10. A wind turbine (1) with a rotor, a rotor shaft (13) aligned substantially horizontally, a planetary gear (15) and a mainframe (12), comprising a drive train bearing (30) according to one of claims 1 to 9.

## Revendications

1. Logement de paliers d'entraînement (30) d'une éolienne (1) ayant un rotor, un arbre de rotor (13) aligné de manière sensiblement horizontale, un engrenage planétaire (15) et un support de machine (12), comportant un palier de rotor (14) côté rotor par rapport à l'engrenage planétaire (15), un palier de porte-satellites (152) pour un porte-satellites (151) côté rotor de l'engrenage planétaire (15) et au moins un support de couple latéral (160, 160'), qui est relié à l'engrenage planétaire (15) sur un côté de l'engrenage planétaire (15), dans lequel le palier de rotor (14) est formé comme un palier fixe pour absorber des charges axiales, **caractérisé en ce qu'**un palier radial (32) est prévu pour absorber des charges de flexion de l'arbre de rotor (13), lequel palier radial comporte un élastomère annulaire (153) qui est agencé dans un plan du palier de porte-satellites (152) et est monté dans une structure de fixation (121) du support de machine (12).

2. Logement de paliers d'entraînement (30) selon la revendication 1, **caractérisé en ce que** le palier radial (32) est formé comme un palier libre pour l'arbre de rotor (13) par rapport à des charges axiales de l'arbre de rotor (13).

3. Logement de paliers d'entraînement (30) selon la revendication 1 ou la revendication 2, **caractérisé en ce que** l'élastomère annulaire (153) a une dureté Shore (A) supérieure à 70, en particulier supérieure à 90, en particulier supérieure à 120.

4. Logement de paliers d'entraînement (30) selon l'une des revendications 1 à 3, **caractérisé en ce que** l'élastomère annulaire (153) est agencé dans un plan du palier de porte-satellites (152) côté rotor et est monté dans une structure de fixation (121) du support de machine (12), en particulier dans des segments du support de machine (12) avec une bride boulonnée ou apte à être boulonnée (122) ou dans une structure entièrement circonférentielle.

5. Logement de paliers d'entraînement (30) selon l'une des revendications 1 à 4, **caractérisé en ce que** ledit au moins un support de couple latéral (160) est formé de manière à absorber des charges de torsion.

6. Logement de paliers d'entraînement (30) selon l'une des revendications 1 à 5, **caractérisé en ce qu'**un ou plusieurs corps élastomères (161) dudit au moins un support de couple latéral (160) est ou sont réalisés de façon à être souples dans une direction de pression, en particulier avec une dureté Shore (A) comprise entre 30 et 80, en particulier entre 35 et 65.

7. Logement de paliers d'entraînement (30) selon l'une des revendications 1 à 6, **caractérisé en ce que** le support de couple (160) ou les supports de couple (160) est ou sont conçus sans précharge et/ou un tampon d'arrêt est présent pour un rappel élastique.

8. Logement de paliers d'entraînement (30) selon l'une des revendications 1 à 7, **caractérisé en ce que** le support de couple (160) comporte des corps élastomères disposés en forme de toit et/ou en forme de douille.

9. Logement de paliers d'entraînement (30) selon l'une des revendications 1 à 8, **caractérisé en ce que** deux supports de couple (160) sont inclus, lesquels supports sont agencés symétriquement des deux côtés de l'engrenage planétaire (15).

10. Eolienne (1) ayant un rotor, un arbre de rotor (13) aligné de manière sensiblement horizontale, un engrenage planétaire (15) et un support de machine (12), comportant un logement de paliers d'entraînement (30) selon l'une des revendications 1 à 9.
